# FASCICULE DE BREVET EUROPEEN

(11) **EP 2 542 090 B1**
(45) Date de publication et mention de la délivrance du brevet: **12.10.2016**
(21) Numéro de dépôt: 11700440.8
(22) Date de dépôt: 19.01.2011
(51) Int. Cl.: A21B 1/44, A21B 1/50, A21B 3/15

(54) **DISPOSITIF DE CUISSON DE PRODUITS ALIMENTAIRES A BASE DE PATE ET PROCEDE DE CUISSON DE TELS PRODUITS**
VORRICHTUNG ZUM BACKEN TEIGBASIERTER LEBENSMITTELPRODUKTE UND VERFAHREN ZUM BACKEN SOLCHER PRODUKTE
DEVICE FOR BAKING DOUGH-BASED FOOD PRODUCTS AND METHOD FOR BAKING SUCH PRODUCTS

(30) Priorité: 04.03.2010 FR 1051568
(43) Date de publication de la demande: 09.01.2013
(73) Titulaire: Revent International AB, 194 27 Upplands Väsby (SE)
(72) Inventeur: PELLE, Philippe, 02400 Chateau-Thierry (FR)
(74) Mandataire: Brann AB
(86) Numéro de dépôt international: PCT/EP2011/050679
(87) Numéro de publication internationale: WO 2011/107305

(56) Documents cités:
- DE-A1- 19 903 048
- FR-A1- 2 480 081

## Description

La présente invention concerne un dispositif pour la cuisson d'aliments, notamment des aliments à base de pâte, tels que des pâtons.

Elle trouve une application particulière dans les domaines de la boulangerie, de la pâtisserie, de la biscuiterie ou des traiteurs, où un certain nombre de produits sont fabriqués à partir d'une pâte.

A des fins de simplification, l'invention sera uniquement décrite en faisant référence à la cuisson de pâtons, par exemple ceux utilisés pour la fabrication des pains et baguettes en boulangerie.

L'invention concerne également un filet de cuisson pour un tel dispositif de cuisson, ainsi qu'un procédé de cuisson de pâtons.

Dans le domaine de la boulangerie, on connait principalement deux types de four, à savoir le four dit "à soles" et le four dit "à convection", ce dernier ayant notamment deux variantes, une à chariot dit «fixe» et une à chariot dit « rotatif ».

Un four à soles comprend une ou plusieurs chambres de cuisson indépendantes ou non, à l'intérieur de laquelle sont disposées une ou plusieurs soles, celles-ci étant superposées pour former une colonne à plusieurs étages de cuisson, voire éventuellement plusieurs colonnes juxtaposées.

Chaque sole est constituée d'une plaque de matériau réfractaire.

Le four est muni de moyens permettant de faire chauffer de l'air, par exemple une résistance électrique ou un brûleur, et de le faire circuler à l'intérieur de l'enceinte afin d'élever la température des soles. Parfois un fluide réchauffé (air, eau, huile ou autre) passe directement à l'intérieur de la sole.

Dans ce type de four, les pâtons sont placés sur la surface de la sole chaude et la cuisson du pain s'effectue par conduction, c'est-à-dire par transfert direct de la chaleur emmagasinée par la sole, au pain.

La qualité de cette cuisson est optimale et permet d'obtenir un pain dont le dessous est immédiatement identifiable par le consommateur comme résultant d'une cuisson artisanale.

Ce type de produit est donc très prisé et peut être vendu avec un prix relativement élevé.

Toutefois, dans ce type de four, les pâtons sont disposés sur les soles, soit un par un à l'aide d'une pelle, soit de façon groupée à l'aide d'un tapis enfourneur, que le boulanger manipule de façon à introduire un lot de pâtons sur une sole donnée du four. Le boulanger doit ensuite répéter cette opération à chaque étage de cuisson (à chaque sole).

En outre, il doit préalablement manipuler chaque pâton pour le prélever d'un chariot dit "de fermentation", sur lequel ce pâton fermente, afin de le disposer sur le tapis enfourneur.

En conséquence, ce type de four nécessite beaucoup de manipulations, beaucoup de main d'oeuvre et présente donc une productivité faible. Toutefois, la demande de la clientèle pour le pain cuit dans un four à soles est en constante augmentation.

Un four à convexion se présente généralement sous la forme d'une armoire, à l'intérieur de laquelle est ménagée une chambre de cuisson, des moyens de chauffage et de propulsion de l'air permettant de faire circuler de l'air chaud dans ladite chambre.

Ce four coopère avec un chariot apte à être introduit à l'intérieur de ladite chambre de cuisson.

Ce chariot supporte plusieurs plateaux, dits « filets », superposés, reçus sur des glissières latérales, le long desquelles ils peuvent coulisser. Chaque filet comprend une série de goulottes parallèles rigides à l'intérieur de chacune desquelles le boulanger peut déposer un pâton. Lorsque les filets sont pleins de pâtons, ils sont introduits sur le chariot, et lorsque le chariot est entièrement rempli, il est introduit en une seule manipulation à l'intérieur de la chambre de cuisson du four à convexion.

A l'intérieur d'un tel four, la cuisson du pain s'effectue par convection, c'est-à-dire par transfert de la chaleur de l'air qui circule à l'intérieur de la chambre de cuisson, vers le pain. Comme précisé précédemment, le chariot peut être fixe ou entraîné en rotation.

Ce type de four permet de manipuler rapidement et simultanément une grande quantité de pâtons. La manipulation du chariot pour l'enfournement peut être effectuée même par des gens peu formés techniquement, la main d'oeuvre est réduite au minimum et la productivité est forte. Cette technique permet donc un gain de temps et des économies d'énergie.

Toutefois, les filets dans lesquels reposent les pâtons marquent le dessous du pain qui présente alors un aspect grillagé. Le consommateur associe alors le pain obtenu à un produit issu d'une fabrication industrielle.

De ce fait, le pain obtenu dans ce type de four est moins demandé par le consommateur et peut être vendu uniquement dans des lieux où la qualité du pain peut être moyenne, par exemple en grandes et moyennes surfaces.

Les boulangers souhaiteraient bien évidemment pouvoir commercialiser du pain, identifié par le consommateur comme un produit issu d'une cuisson artisanale, tout en conservant la productivité qui résulte de l'utilisation, d'un four à convexion.

Plusieurs solutions techniques ont été envisagées pour tenter de répondre à cet objectif.

On connait ainsi des systèmes dit "à multi-chargeurs", qui combinent l'utilisation d'un four à soles classique avec un chariot comportant plusieurs tapis d'enfournement superposés. Ce chariot permet au boulanger de charger successivement un lot de pâtons sur la sole de chaque étage de cuisson.

Toutefois, un tel chariot à multi-chargeurs est très lourd et donc difficile à manipuler. Il doit de plus être impérativement aligné rigoureusement au regard des soles du four. Enfin, il comprend généralement seulement huit à dix tapis d'enfournement, pour des raisons techniques et afin de limiter son poids. Ceci induit en conséquence une limitation du nombre de soles du four également à huit ou dix.

Les chariots de fermentation utilisés en amont de la cuisson comprennent eux, entre seize et vingt niveaux. Il y a donc incohérence entre d'une part le nombre de niveaux des chariots de fermentation, et d'autre part le nombre de tapis d'enfournement du chariot multi-chargeurs et/ou le nombre de soles dans le four. Ceci oblige alors le boulanger à utiliser des chariots de fermentation spécifiques et cohérents avec le nombre de soles, mais en sous-exploitant la capacité des chambres de fermentation.

Le nombre de chariots et de chambres de fermentation doit alors être accru, ce qui accroît également l'encombrement et le coût.

En outre, les manipulations en amont de la cuisson restent fastidieuses, et il est nécessaire d'avoir plusieurs chariots de fermentation et de transfert des pâtons, desquels le boulanger prélève les pâtons pour les disposer sur le chariot multi-chargeurs. L'encombrement global de tout ce matériel est important.

On connait également un dispositif qui combine l'utilisation d'un four à soles avec un chariot comportant plusieurs filets recevant des pâtons. Le chariot est introduit à l'intérieur du four de façon que les filets soient situés à faible distance des soles.

Une telle solution permet d'obtenir les avantages d'un four à convexion, en termes de productivité, toutefois la cuisson s'effectue dans ce cas par rayonnement et le dessous du pain conserve son aspect "grillagé", associé à une cuisson de type industriel dont l'image est négative auprès du consommateur.

On connaît enfin d'après le document DE 199 03 048, un four comprenant une chambre de cuisson équipée d'une pluralité de soles chauffantes et un chariot de cuisson supportant plusieurs plaques à pâtisserie rigides. Ce four est en outre doté d'un dispositif de levage qui permet de soulever ou d'abaisser ledit chariot de cuisson afin d'amener les plaques à pâtisserie au contact des soles chauffantes ou au contraire de les en écarter.

La position du chariot de cuisson peut ainsi être modifiée durant la cuisson. Selon une variante de réalisation préférée décrite dans ce document, les plaques à pâtisserie sont tout d'abord amenées au contact des soles, de façon à assurer un transfert de chaleur important, puis elles sont écartées de celles-ci pendant le reste de la cuisson.

Un tel four présente de nombreux inconvénients. Les plaques à pâtisserie planes et rigides peuvent être lourdes et présenter une grande inertie thermique si elles sont réalisées en acier. Elles peuvent être plus légères si elles sont en tôle d'aluminium, mais avec alors un transfert calorifique de mauvaise qualité.

La cuisson du produit obtenu est donc difficile à réguler.

Par ailleurs, si le pâton doit subir une étape de fermentation préalable, de telles plaques à pâtisserie ne peuvent être utilisées car le pâton y est stocké à plat et ne conserve pas sa forme de rondin.

Enfin, l'évacuation de l'humidité entre le produit à cuire et la plaque à pâtisserie est très mauvaise. En cas d'accumulation importante d'humidité, par exemple durant une étape de fermentation précédant la cuisson, la vapeur d'eau non évacuée marque la semelle du produit cuit (micro-bullage), de sorte que le produit cuit présente un aspect visuel peu apprécié des consommateurs.

L'invention a donc pour objet de remédier à ces inconvénients de l'état de la technique et notamment d'offrir un dispositif de cuisson qui permette d'allier les qualités visuelles et gustatives des produits cuits sur sole, avec la facilité de manipulation, la productivité et la rentabilité du procédé de cuisson utilisant un four à convexion, tel que décrit précédemment.

A cet effet, l'invention concerne un dispositif de cuisson de produits alimentaires à base de pâte, notamment des pâtons, comprenant :
- un four et un chariot,
- le four comprenant une chambre de cuisson, un module de cuisson qui comprend lui-même plusieurs soles de cuisson en matériau bon conducteur thermique, superposées, espacées les unes des autres, et des moyens de chauffage desdites soles, ce module de cuisson étant disposé à l'intérieur de ladite chambre de cuisson.

Conformément à l'invention, ce dispositif de cuisson :
- comprend plusieurs filets, chacun d'entre eux comprenant une bande de matériau souple, fixée sur une armature, ce matériau souple, déformable, étant résistant à la chaleur et comprenant au moins une alvéole de réception desdits produits alimentaires à cuire,
- ledit chariot supporte lesdits filets disposés de façon à être superposés tout en étant espacés les uns des autres, il est agencé afin de permettre l'introduction desdits filets dans le four et leur extraction de celui-ci et il comprend des moyens de positionnement de chaque filet au dessus et en regard d'une sole de cuisson,
- et il comprend en outre des moyens de déplacement vertical des soles dudit module de cuisson et/ou des filets les uns par rapport aux autres, ces moyens de déplacement vertical permettant d'amener lesdites soles et lesdits filets dans une position dite "active", dans laquelle le fond des alvéoles d'un filet vient au contact de la sole de cuisson située en regard et se déforme au contact de cette sole de cuisson, de façon à réaliser une cuisson par conduction desdits produits alimentaires, et dans une position dite "passive", dans laquelle le fond desdites alvéoles est écarté de la sole située en regard, pour que lesdits filets puissent être introduits ou extraits dudit four.

Selon d'autres caractéristiques avantageuses et non limitatives de l'invention, prises seules ou en combinaison :
- lesdits moyens de déplacement vertical des soles et/ou des filets sont logés dans le four ;
- lesdits moyens de déplacement vertical sont des moyens de déplacement du module de cuisson qui permettent de le soulever pour l'amener dans la position active et de l'abaisser pour l'amener dans la position passive ;
- lesdits moyens de déplacement vertical des filets sont situés sur le chariot et sont constitués par un châssis support desdits filets, mobile en translation par rapport à la structure du chariot ;
- le dispositif de cuisson comprend des moyens de mise en rotation simultanée des filets et du module de cuisson ;
- les moyens de mise en rotation simultanée des filets et du module de cuisson constituent également les moyens de déplacement vertical des soles dudit module de cuisson et/ou des filets l'un par rapport à l'autre ;
- lesdits moyens de chauffage des soles comprennent une turbine de propulsion d'air et une source de chauffage, tel qu'un brûleur ou une résistance électrique ;
- le dispositif de cuisson comprend un dispositif d'asservissement du fonctionnement des moyens de déplacement vertical desdites soles et/ou desdits filets l'un par rapport à l'autre et/ou des moyens de mise en rotation simultanée des filets et du module de cuisson, en fonction de la position de la porte d'accès au four, de sorte que les filets et les soles sont placés en position active lorsque la porte du four est fermée et sont placés en position passive lorsque la porte du four est ouverte ;
- ledit chariot comprend un châssis muni de paires de glissières et l'armature de chaque filet est dimensionnée et agencée pour pouvoir coulisser le long desdits glissières et y être supportée ;
- le matériau souple constituant lesdits filets est un matériau perméable à l'eau et/ou à la vapeur d'eau, telle une toile ou un treillis ;
- lesdits filets sont réalisés en fibres de verre tissées ;
- lesdits filets sont revêtus d'un matériau anti-adhérent.

Enfin, l'invention concerne également un procédé de cuisson de pâtons. Il comprend les étapes consistant à :
- disposer lesdits pâtons à l'intérieur des alvéoles d'un filet constitué d'un matériau souple, tel qu'une toile ou un treillis, fixé sur une armature, ce matériau souple étant résistant à la chaleur,
- introduire ce filet à l'intérieur d'un four équipé d'au moins une sole de cuisson et de moyens de chauffage desdites soles,
- déplacer verticalement ladite sole et/ou ledit filet l'un par rapport à l'autre, de façon à amener ladite sole et ledit filet dans une position dite "active", dans laquelle le fond des alvéoles du filet vient au contact de la sole de cuisson située en regard et se déforme au contact de cette sole de cuisson, de façon à réaliser une cuisson par conduction desdits pâtons,
- déplacer verticalement ladite sole et/ou ledit filet l'un par rapport à l'autre, de façon à les amener dans une position dite "passive", dans laquelle le fond des alvéoles est écarté de la sole située en regard, de façon à pouvoir sortir ledit filet du four.

D'autres caractéristiques et avantages de l'invention apparaîtront de la description qui va maintenant en être faite, en référence aux dessins annexés, qui en représentent, à titre indicatif mais non limitatif, plusieurs modes de réalisation possibles.

Sur ces dessins :
- la figure 1 est une vue en perspective d'un mode de réalisation du dispositif de cuisson conforme à l'invention qui associe un four et un chariot ;
- la figure 2 est une vue en perspective d'un filet,
- les figures 3A et 3B sont des schémas représentant le principe de fonctionnement d'un premier mode de réalisation dudit dispositif de cuisson,
- les figures 4A et 4B et respectivement les figures 5A et 5B sont des schémas similaires mais pour un second et un troisième mode de réalisation de l'invention.

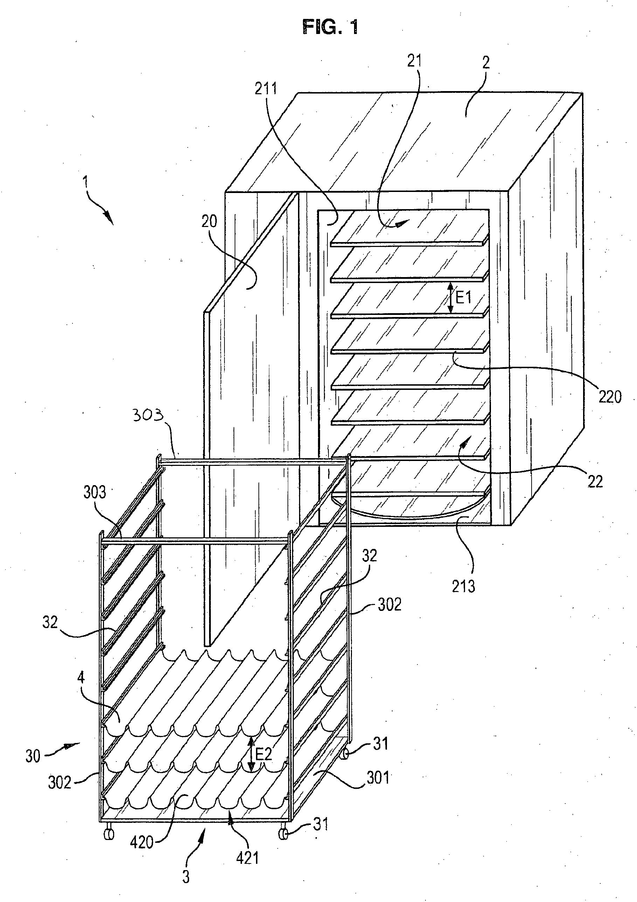

Comme on peut le voir sur la figure 1, le dispositif de cuisson 1 conforme à l'invention comprend un four 2 et un chariot 3.

Le four 2 est un four du type armoire, qui présente une porte 20 permettant l'accès à une chambre de cuisson 21 ménagée à l'intérieur de ladite armoire.

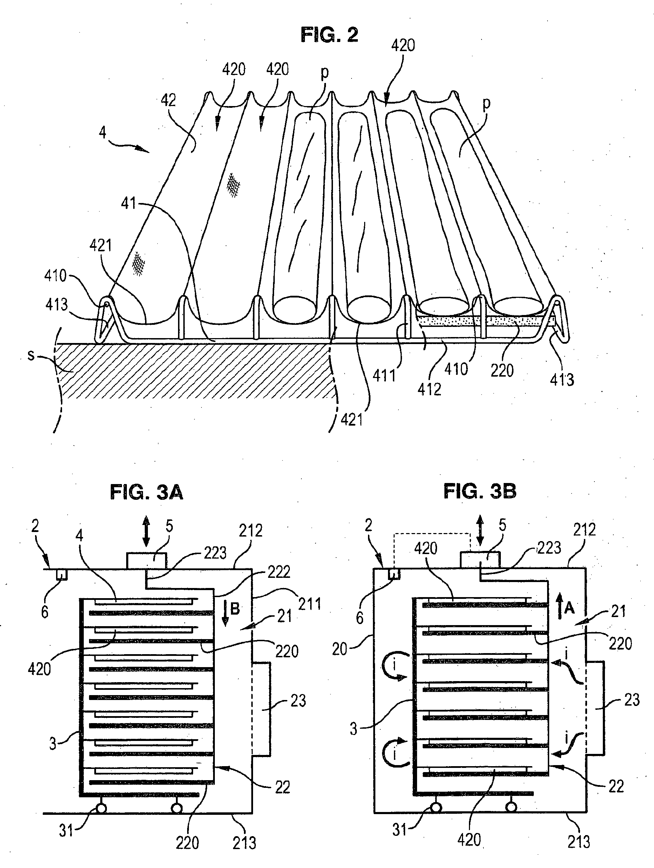

La chambre de cuisson 21 est délimitée par des parois verticales 211 prévues à l'intérieur de l'armoire, un plafond 212 et un fond 213, (voir également les figures 3A à 5B).

Un module de cuisson 22 est disposé à l'intérieur de la chambre de cuisson 21.

Le module de cuisson 22 comprend plusieurs soles 220 superposées, espacées les unes des autres d'un certain espacement E1. Chaque sole consiste en une plaque d'un matériau bon conducteur thermique, par exemple matériau réfractaire, aluminium, céramique, fonte ou autre.

Le nombre de ces soles 220 est variable. Afin de simplifier les figures, le nombre des soles représenté est de huit sur la figure 1 et de sept sur les figures 3A à 5B. Toutefois, le nombre de ces soles est généralement compris entre seize et vingt, en fonction de la dimension des produits à cuire.

Comme cela sera décrit plus en détails ultérieurement, le module de cuisson 22 peut être fixe ou mobile.

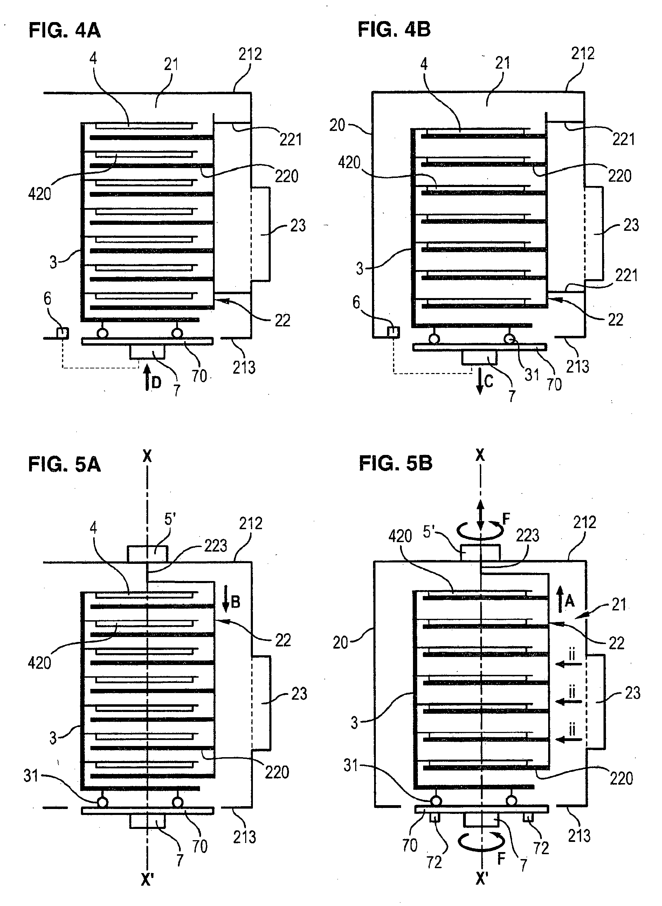

Lorsque ce module de cuisson 22 est fixe, les soles 220 peuvent être fixées latéralement directement sur les parois verticales 211 de la chambre de cuisson. Elles peuvent également être fixées sur un châssis métallique 221, lui-même solidaire des parois du four, (voir par exemple les figures 4A et 4B).

Les soles 220 peuvent être fixées à demeure aux parois du four ou au châssis 221 ou au contraire être amovibles. Dans ce dernier cas, elles reposent par exemple sur des cornières, elles-mêmes solidaires des parois du four ou du châssis.

Les soles 220 peuvent également être posées ou fixées sur un chariot, ce dernier étant logé dans la chambre de cuisson 21 et pouvant en être sorti, par exemple lors du nettoyage du four.

De préférence, et pour des raisons qui seront détaillées ultérieurement, les soles 220 sont fixées soit directement soit par l'intermédiaire d'un châssis, uniquement sur la paroi verticale arrière du four.

Le four 2 comprend également des moyens 23 de chauffage des soles 220.

Les moyens de chauffage 23 peuvent consister en une résistance électrique ou en un fluide caloporteur qui serpente dans l'épaisseur de chaque sole 220 de façon à chauffer celle-ci. Dans ce cas, les soles 220 sont fixes.

Toutefois, de préférence, ces moyens de chauffage 23 consistent en un brûleur ou en une résistance électrique, associé à une turbine qui permet de propulser l'air chaud ou autre fluide, réchauffé au préalable par ce brûleur ou cette résistance, à l'intérieur de la chambre de cuisson 21.

Ces moyens 23 sont représentés de façon schématique sur les figures 3A à 5B et sont visibles uniquement sur ces figures.

Au contact de l'air chaud, le matériau des soles 220 emmagasine de la chaleur.

Ce principe de chauffage des soles est dit à "chaleur tournante".

Le module de cuisson 22 peut être soit immobilisé en rotation, soit entrainé en rotation (voir flèches F sur la figure 5B), l'air chaud étant propulsé par la turbine et circulant à l'intérieur de la chambre de cuisson 21.

Le module de cuisson 22 reste en permanence à l'intérieur de la chambre de cuisson 21, de sorte que les soles 220 restent chaudes, une fois qu'elles ont atteint la température nécessaire à la cuisson des produits alimentaires. On notera toutefois qu'il peut être amovible pour des opérations de maintenance, ou pour remettre le four en version standard si l'on souhaite revenir à un usage en mode convexion.

En se reportant à la figure 1, on peut voir un mode de réalisation du chariot 3. Celui-ci comprend un châssis référencé 30, monté par exemple sur quatre roulettes 31 qui autorisent le déplacement du chariot.

Le châssis 30 se compose d'un fond 301 de forme carrée ou rectangulaire aux angles duquel sont fixés ou soudés quatre montants verticaux 302, reliés entre eux deux à deux à leur extrémité supérieure par une traverse 303 qui vient rigidifier l'ensemble.

Les traverses et les montants sont par exemple constitués de tubes métalliques.

Le fond 301 peut être plein, comme représenté sur la figure 1, ou être constitué d'un assemblage de quatre tubes assemblés ou soudés à leurs extrémités de façon à définir un cadre.

Des glissières 32, constituées par exemple par des cornières métalliques en L, sont fixées à leurs extrémités aux montants verticaux 302. Ces glissières 32 sont disposées par paire, (une solidaire de chaque paire de montants 302), de façon à recevoir les deux extrémités latérales d'un filet 4 qui sera décrit ultérieurement et à maintenir ce dernier dans un plan horizontal ou sensiblement horizontal.

Les filets 4 peuvent ainsi être chargés sur le chariot 3 par coulissement entre les deux glissières 32 d'une même paire.

Afin de ne pas surcharger inutilement les figures, le chariot 3 a été représenté comme pouvant accueillir uniquement huit filets 4 superposés. Toutefois, un tel chariot comprend normalement entre seize et vingt paires de glissières 32, de façon à pouvoir accueillir autant de filets 4.

Avantageusement, le nombre de filets 4 et de soles 220 est identique.

Selon une autre variante de réalisation non représentée sur les figures, le chariot 3 pourrait être réalisé en deux parties, à savoir une première partie supportant les filets 4 et une seconde partie comportant les roulettes 31 ou autres moyens de déplacement du chariot, ces deux parties étant dissociables l'une de l'autre.

Selon une autre variante encore de réalisation non représentée sur les figures, le chariot 3 comprend des bras préhenseurs qui permettent de manipuler l'ensemble des filets 4 et de les disposer à l'intérieur du four 2 ou de les en extraire. Le chariot 3 est alors extrait du four pendant la cuisson proprement dite.

L'utilisation de ces différents fours sera décrite ultérieurement.

L'un des filets 4 va maintenant être décrit plus en détails en faisant référence à la figure 2.

Par le terme "filet" 4, on désigne un plateau comprenant une armature 41 formant un cadre support pour une bande de matériau souple 42, par exemple une toile ou un treillis. L'armature 41 est de préférence en métal ou en tout autre matériau résistant aux températures régnant à l'intérieur du four.

L'armature 41 est constituée par exemple de plusieurs fils pleins métalliques, par exemple en acier inoxydable, assemblés entre eux de préférence par soudure.

L'armature 41 se compose de plusieurs fils rectilignes 410, au nombre de sept sur la figure 2, disposés horizontalement parallèlement les uns aux autres. Les cinq fils 410 du milieu sont en outre recourbés verticalement à leurs deux extrémités 411. Un fil supplémentaire 412 est recourbé plusieurs fois sur lui-même de façon à définir un cadre de forme carré ou rectangulaire, sur lequel les extrémités des fils 410 sont soudées.

Les deux portions latérales rectilignes du fil 412 constituent des guides 413. Ils reposent sur les glissières 32 lorsque le filet 4 est engagé sur le chariot 3.

La bande de matériau souple 42 est disposée et fixée sur l'armature 41 de façon à former une série d'alvéoles parallèles 420, ici en forme de goulottes.

Chaque goulotte 420 s'étend entre deux fils 410 voisins. Sur la figure 2, on peut voir six goulottes formées entre les sept fils 410.

La longueur de la bande du matériau souple 42 et donc la longueur des goulottes 420 est adaptée de façon à pouvoir recevoir par exemple un pâton p ou deux mis bout à bout, voire plus.

Le nombre d'alvéoles 420 est fonction des dimensions du produit et de la capacité de cuisson que l'on souhaite obtenir pour le four. Il est d'au moins une alvéole par filet 4.

La bande de matériau souple 42 doit être suffisamment souple pour se déformer de manière réversible et épouser la forme du pâton p lorsque celui-ci est disposé à l'intérieur d'une alvéole 420 (voir la partie centrale de la figure 2) ou se déformer et venir au contact de la sole 220, comme cela sera décrit ultérieurement, (voir partie droite de la figure 2).

Le fond des alvéoles 420 porte la référence 421.

Le matériau souple 42 doit en outre être résistant à la chaleur régnant dans le four. Il est avantageusement perméable à l'eau et/ou à la vapeur d'eau.

Selon une première variante de réalisation, le matériau souple 42 est une toile est constituée par des fils d'un matériau résistant à la chaleur, par exemple en acier inoxydable, ou en un autre matériau, en fonction de l'aspect esthétique souhaité du produit à cuire. Ces fils sont tressés de façon à former une toile ou un treillis. Le diamètre de chaque fil est de préférence compris entre 20 µm et 100 µm. Le rapport entre la surface de vide et la surface de plein du filet (pourcentage de vide) est de préférence inférieur à 60 %, de préférence encore compris entre 20 % et 60 %, afin d'éviter que la pâte ne traverse les mailles, lorsqu'elle n'est pas encore cuite. L'existence de passages au travers des mailles du filet permet de rendre ce matériau perméable à l'eau et/ou à la vapeur d'eau.

De préférence, le fil utilisé pour le treillis est nu, c'est-à-dire exempt d'un revêtement anti-adhérent du type silicone ou polymère fluoré, tels que ceux utilisés dans les filets connus de l'art antérieur. Ceci est plus sain pour le consommateur du produit cuit obtenu. Toutefois, il pourrait également être recouvert d'un tel revêtement anti-adhérent.

Selon une autre variante de réalisation, le matériau souple 42 est un tissu formé de fibres de verre tissées, (dénommé "tissé de verre tissé"). De préférence, il est recouvert d'un matériau anti-adhérent, par exemple du polytétrafluoroéthylène (PTFE) ou du silicone. De préférence, son épaisseur est inférieure à 0,3 mm, de préférence encore inférieure à 0,15 mm ou mieux de l'ordre de 0,1 mm. Un tel tissu est commercialisé par exemple par la société TACONIC Corporate.

Les ouvertures existant entre les fibres ou les fils garantissent la perméabilité à l'eau et à la vapeur d'eau. Leurs dimensions sont toutefois suffisamment faibles pour que la pâte des pâtons (même fortement hydratée) ne les traverse pas lorsqu'elle n'est pas encore cuite.

Les glissières 32 du chariot 3 sont positionnées de façon que deux filets 4 superposés contigus soient écartés l'un de l'autre d'un espace E2.

Sur la figure 1, seuls trois filets 4 ont été représentés.

Les dimensions du chariot 3, des filets 4 et de leur écartement E2, ainsi que les dimensions des soles 220 et de leur écartement E1 et la largeur des soles 220 et des filets 4 sont adaptées de façon à permettre l'introduction du chariot 3 à l'intérieur de la chambre de cuisson 21, chaque sole 220 venant s'intercaler sous un filet 4.

Cette disposition spécifique apparait mieux sur les figures 3A à 5B.

Pour la version d'un four ayant des soles 220 fixées aux parois latérales 211 du four, on notera qu'afin de pouvoir obtenir cet emboîtement du chariot 3 entre les soles superposées 220, le chariot ne comporte pas de montants verticaux 302 dans sa partie avant. Les glissières 32 sont en porte-à-faux.

Pour la version du four avec fixation des soles 220 sur la paroi arrière du four, ou sur un châssis arrière, le chariot 30 peut comprendre quatre montants verticaux 302. Dans ce cas, les soles 220 ou l'ensemble du module de cuisson 22 sont d'une largeur inférieure à celle du chariot 3, ce qui permet l'enfournement.

Conformément à l'invention, le four 2 comprend en outre des moyens de déplacement vertical relatif des soles 220 par rapport aux filets 4.

Différents modes de réalisation de ces moyens vont maintenant être décrits en liaison avec les schémas des figures 3A à 5B.

Ces moyens de déplacement vertical permettent d'amener les soles 220 du module de cuisson 22 et les filets 4, soit dans une position, dite "active", dans laquelle le fond 421 des alvéoles des filets 4 vient au contact d'une sole 220, soit dans une position, dite "passive", dans laquelle le fond 421 des alvéoles 420 est au contraire écarté de la sole 220 située en regard.

Par « moyens de déplacement vertical », on entend tout moyen qui permet d'amener les soles ou les filets dans une position plus haute ou plus basse que leur position d'origine au moment où le chariot est chargé dans le four.

Sur la figure 2, on a représenté de façon schématique, quatre états différents occupés par les alvéoles 420.

Dans la partie gauche de la figure 2, on a représenté la situation de deux alvéoles 420 vides lorsque le filet 4 est posé sur un support plan **s**, par exemple un plan de travail. Le matériau souple 42 est fixé sur l'armature 41 de façon que le fond 421 des alvéoles ne touche pas, ou affleure à peine sur le support **s**.

Dans la partie médiane gauche de la figure 2, on a représenté la situation où un pâton **p** a été déposé dans une alvéole, alors que le filet 4 repose sur le support plan **s**. Le matériau souple 42 épouse la forme du pâton **p** mais ne touche pas ou affleure le support **s**. Dans la partie médiane droite de la figure 2, on a représenté la situation où un pâton **p** a été déposé dans une alvéole, alors que le filet 4 est placé sur le chariot 3. Ces deux situations correspondent par exemple au moment où le pâton **p** fermente. Grâce à cette caractéristique de déformabilité du matériau 42, le pâton est tenu latéralement et peut conserver sa section sensiblement circulaire durant cette phase.

Enfin, dans la partie droite de la figure 2, on a représenté la situation où deux pâtons **p** ont été disposés dans des alvéoles 420 et où le filet 4 et une sole 220 sont dans la position active précitée. Dans ce cas, le matériau souple 42 du filet s'est déformé (notamment le fond 421 de l'alvéole 420) pour venir à plat au contact de la sole 220 et permettre la cuisson par conduction des pâtons **p** placés dans les alvéoles 420.

La déformation du matériau souple 42 étant réversible, l'alvéole 420 reprend sa forme d'origine (voir partie gauche de la figure 2) lorsque le filet est écarté de la sole.

Un premier mode de réalisation des moyens de déplacement vertical va maintenant être décrit en liaison avec les figures 3A et 3B. Dans ce cas, ces moyens 5 permettent le déplacement du module de cuisson 22 verticalement par rapport au chariot 3 et aux soles 220.

Les bords arrière des soles 220 du module de cuisson 22 sont fixés sur un châssis mobile 222, constitué par exemple par des tubes métalliques assemblés.

Ce châssis mobile 222 se prolonge à sa partie supérieure, par un axe 223 vertical dont l'extrémité supérieure est reliée à des moyens mécaniques et/ou moteurs 5. Ces derniers permettent de déplacer verticalement l'axe 223 et conjointement le châssis 222 et l'ensemble des soles 220.

Selon une autre variante possible, le châssis 222 coulisse le long de rails de guidage solidaires des parois du four sous l'action de moyens mécaniques et/ou moteur 5.

Ces moyens 5 sont par exemple un moteur électrique et/ou des éléments purement mécaniques, tels que des leviers manuels, ou des biellettes ou des cames.

De façon avantageuse, un dispositif d'asservissement peut être prévu pour asservir le fonctionnement des moyens 5 de déplacement vertical, avec l'ouverture ou la fermeture de la porte 20, par l'opérateur.

Ce dispositif est par exemple constitué par un capteur 6 qui détecte la position de la porte 20 et qui est connecté auxdits moyens moteurs/mécaniques 5, de façon à entrainer l'activation ou l'arrêt de ceux-ci.

Le fonctionnement du dispositif de cuisson est le suivant.

Une fois que les pâtons ont été disposés dans les alvéoles 420 du filet 4 et que ces filets ont été chargés sur le chariot 3, le boulanger peut ouvrir la porte 20 et introduire le chariot 3 à l'intérieur de la chambre de cuisson 21, en faisant rouler ce chariot sur le fond 213 du four 2.

Les soles 220 ont été préalablement mises en chauffe.

Le boulanger ferme la porte 20 et les moyens moteurs / mécaniques 5 sont actionnés de façon à déplacer le module de cuisson 22 vers le haut comme représenté par la flèche A en figure 3B. On arrive ainsi à la position active.

Lorsque la cuisson par conduction est terminée, le boulanger ouvre la porte 20, et les moyens moteurs 5 sont actionnés en sens inverse pour provoquer la descente du module 22 (voir la flèche B sur la figure 3A).

Dans cette position passive, les soles 220 sont écartées du fond 421 des alvéoles et le boulanger peut sortir le chariot 3 du four 2.

Deux autres modes de réalisation vont maintenant être décrites en liaison avec les figures 4A et 4B d'une part, 5A et 5B d'autre part.

Les éléments identiques portent les mêmes références numériques.

Dans le mode de réalisation des figures 4A et 4B, le module de cuisson 22 est fixe puisqu'il est monté sur un châssis 221 fixe, solidaire des parois du four et c'est le chariot 3 et les soles 220 qui sont déplacés et plus précisément abaissés.

Dans ce cas, le fond 213 du four comprend dans sa partie centrale une plateforme 70, par exemple circulaire, reliée à des moyens mécaniques ou moteurs 7, tels que des vérins ou des bras de levier. Ces moyens 7 permettent d'abaisser la plateforme 70 dans le sens de la flèche C sur la figure 4B, jusqu'à ce que le fond 421 des alvéoles 420 viennent au contact des soles 220, ou inversement de relever la plateforme 70 (flèche D sur la figure 4A), jusqu'à écarter le fond des alvéoles 420, des soles 220 et à pouvoir sortir le chariot 3.

Une fois encore, le capteur 6 détectant l'ouverture ou la fermeture de la porte 20 peut être relié aux moyens mécaniques ou moteurs 7, de façon à asservir le mouvement de la plate forme 70 à la position de la porte 20.

Selon une variante, les moyens pour abaisser les filets (4) pourraient être intégrés au chariot 3. Dans ce cas, les filets 4 seraient montés sur un châssis support mobile, apte à effectuer un mouvement de coulissement vertical par rapport à la structure du chariot 3 supportant les roues ou d'autres moyens de déplacement du chariot.

Ce déplacement pourrait être réalisé à l'aide de moyens mécaniques, par exemple un ou plusieurs ergots solidaires du châssis mobile, aptes à être reçus dans des orifices situés à différents hauteurs sur le châssis fixe constituant la structure du chariot 3. Un système de biellettes est également envisageable.

Ainsi, les filets 4 seraient amenés au contact des soles 220 et se déformeraient pour réaliser la cuisson par conduction et inversement pourraient être relevés et écartés des soles pour l'introduction ou l'extraction du chariot hors du four.

Le mode de réalisation des figures 5A et 5B permet en outre de faire tourner conjointement le chariot 3 et le module de cuisson 22 autour d'un axe vertical X-X' coaxial à l'axe 223, (voir les flèches F sur la figure 5B).

Dans ce cas, les moyens moteurs 5' permettent non seulement de faire coulisser verticalement l'axe 223, mais également de le faire tourner sur lui-même.

De plus, des roulements 72 sont prévus sous la plate forme 70, de sorte que lorsque le module 22 est entraîné en rotation le chariot 3 l'est également et la plateforme 70 tourne sur elle-même grâce aux roulements 72.

La périphérie de la plateforme 70 peut par exemple être munie d'une série de dents qui engrènent avec un pignon porté sur l'arbre de sortie d'un moteur.

La plateforme 70 peut également comprendre un axe central vertical entrainé directement en rotation.

Selon une variante du mode de réalisation ci-dessus, non représentée sur les figures, la plateforme 70 peut être supprimée et le fond 213 du four est alors plan, comme représenté sur les figures 3A et 3B, ce qui simplifie le nettoyage.

Le module de cuisson 22 est légèrement modifié de façon à comporter des organes de préhension du chariot 3. Une fois le chariot 3 introduit dans le four 2, de façon que les filets 4 soient au-dessus des soles 220, le module de cuisson 22 est déplacé vers le haut dans le sens de la flèche A de la figure 5B. Après avoir parcouru une certaine course verticale, les soles 220 viennent au contact des filets 4 qui se déforment comme expliqué précédemment et dans cette position relative du module de cuisson 22 et du chariot 3, les organes de préhension du module 22 entrent alors en contact avec le chariot 3.

Le mouvement de déplacement vertical vers le haut du module de cuisson 22 est poursuivi, et du fait de l'action de ces organes de préhension, le chariot 3 est soulevé également et ne repose plus sur le fond 213 du four.

L'ensemble module 22/chariot 3 peut ensuite être entraîné en rotation autour de l'axe vertical X-X', comme expliqué précédemment.

Les organes de préhension permettent de fixer la position relative des soles 220 et des filets 4 et d'éviter que ces derniers ne soient trop déformés ou écrasés lorsque la montée du module 22 se poursuit.

A la fin de la cuisson, le module 22 est rabaissé (flèche B) comme expliqué précédemment conjointement avec les figures 4A et 5B.

L'air chaud soufflé par la turbine 23 traverse la chambre de cuisson (flèches ii) pour d'une part chauffer les soles 22 qui cuiront ainsi le produit par conduction, et d'autre part compléter la cuisson par effet ventilé/convexion.

Par ailleurs, et bien que cela n'est pas été représenté sur les figures il est également possible de combiner les différents modes de réalisation des figures 3A à 5B de façon à déplacer simultanément verticalement le chariot 3 et le module de cuisson 22 et/ou de les entrainer en rotation.

Il est également possible de combiner les différents modes de réalisation du four des figures 3A à 5B, avec le chariot en deux parties ou le chariot à bras préhenseurs décrits précédemment.

Dans le premier cas, le chariot est introduit dans le four, puis la partie supportant les roulettes en est extraite, tandis que la partie supportant les soles reste à l'intérieur du four où les différents moyens de déplacement relatif des soles et des filets sont activés, pour réaliser la cuisson par conduction. Après la cuisson, la partie du chariot équipée de roulettes est de nouveau introduite dans le four, solidarisée à la partie portant les filets 4 et l'ensemble est extrait du four.

Dans le second cas, de façon similaire, seuls les filets 4 restent dans le four pendant la cuisson. Ils reposent par exemple sur des glissières prévues dans le four et ce sont les soles 220 qui sont déplacées en direction des filets 4 pour effectuer la cuisson par conduction. Le reste du chariot 3 est hors du four pendant la cuisson. Inversement en fin de cuisson, il est réintroduit dans le four pour que les bras préhenseurs permettent l'extraction des filets 4.

Le dispositif de cuisson conforme à l'invention comprend de nombreux avantages.

Il permet d'obtenir une cuisson par conduction (dite cuisson « sole »), par contact direct de la sole 220 avec le fond des alvéoles du filet 4, tout en ayant la rentabilité et la facilité d'utilisation d'un four à convexion.

Par ailleurs, le chariot 3 et les filets 4 peuvent être utilisés pendant la fermentation de la pâte. En effet, les pâtons sont maintenus latéralement par les bords des alvéoles 420 et le matériau souple 42 épouse la forme des pâtons. Le chariot 3 est ensuite introduit directement dans le four. Le boulanger n'a plus besoin de transférer les pâtons d'un premier chariot de fermentation vers un second chariot de transfert ou d'enfournement comme cela était le cas avec les dispositifs connus de l'art antérieur.

Une fois dans le four, le matériau 42 se déforme au contact des soles 220 (s'aplatit) et assure une plus grande surface de contact et donc de chauffe entre le pâton et la sole, en garantissant une cuisson par conduction et en permettant d'obtenir une semelle de pain ayant l'aspect esthétique d'une cuisson directement sur sole, comme avec les procédés de l'art antérieur.

Enfin, ce dispositif s'applique également à la cuisson de pâtisseries, par exemple de biscuits ou de fonds de tarte.

## Revendications

1. Dispositif de cuisson (1) de produits alimentaires à base de pâte, notamment des pâtons, comprenant :
- un four (2) et un chariot (3),
- le four (2) comprenant une chambre de cuisson (21), un module de cuisson (22) qui comprend lui-même plusieurs soles de cuisson (220) en matériau bon conducteur thermique, superposées, espacées les unes des autres, et des moyens de chauffage (23) desdites soles, ce module de cuisson (22) étant disposé à l'intérieur de ladite chambre de cuisson (21), **caractérisé en ce que** ledit dispositif comprend :
- plusieurs filets (4), chacun d'entre eux comprenant une bande de matériau souple (42), fixée sur une armature (41), ce matériau souple (42), déformable, étant résistant à la chaleur et comprenant au moins une alvéole (420) de réception desdits produits alimentaires à cuire,
- ledit chariot (3) supportant lesdits filets disposés de façon à être superposés tout en étant espacés les uns des autres, est agencé afin de permettre l'introduction desdits filets (4) dans le four (2) et leur extraction de celui-ci et il comprend des moyens de positionnement de chaque filet (4) au dessus et en regard d'une sole de cuisson (220),
- des moyens de déplacement vertical (5, 5', 7) des soles (220) dudit module de cuisson (22) et/ou des filets (4) les uns par rapport aux autres, ces moyens de déplacement vertical permettant d'amener lesdites soles (220) et lesdits filets (4) dans une position dite "active", dans laquelle le fond (421) des alvéoles (420) d'un filet (4) vient au contact de la sole de cuisson (220) située en regard et se déforme au contact de cette sole de cuisson (220), de façon à réaliser une cuisson par conduction desdits produits alimentaires, et dans une position dite "passive", dans laquelle le fond (421) desdites alvéoles est écarté de la sole (220) située en regard, pour que lesdits filets (4) puissent être introduits ou extraits dudit four (2),
lesdits moyens de déplacement vertical (5, 5', 7) des soles (220) et/ou des filets (4) étant logés dans le four (2) , **en ce que** il comprend des moyens (5', 7, 70) de mise en rotation simultanée des filets (4) et du module de cuisson (22), et **en ce que** ces moyens de mise en rotation simultanée des filets (4) et du module de cuisson (22) constituent également les moyens de déplacement vertical des soles (220) dudit module de cuisson (22) et/ou des filets (4) l'un par rapport à l'autre.

2. Dispositif selon la revendication 1, **caractérisé en ce que** lesdits moyens de déplacement vertical (5) sont des moyens de déplacement du module de cuisson (22) qui permettent de le soulever pour l'amener dans la position active et de l'abaisser pour l'amener dans la position passive.

3. Dispositif selon la revendication 1, **caractérisé en ce que** lesdits moyens de déplacement vertical des filets (4) sont situés sur le chariot (3) et sont constitués par un châssis support desdits filets (4), mobile en translation par rapport à la structure du chariot (3).

4. Dispositif de cuisson selon l'une quelconque des revendications précédentes, **caractérisé en ce que** lesdits moyens de chauffage (23) des soles comprennent une turbine de propulsion d'air et une source de chauffage, tel qu'un brûleur ou une résistance électrique.

5. Dispositif de cuisson selon l'une quelconque des revendications précédentes, **caractérisé en ce qu'**il comprend un dispositif d'asservissement (6) du fonctionnement des moyens (5, 7, 70, 5') de déplacement vertical desdites soles (220) et/ou desdits filets (4) l'un par rapport à l'autre et/ou des moyens de mise en rotation simultanée des filets (4) et du module de cuisson (22), en fonction de la position de la porte d'accès (20) au four (2), de sorte que les filets (4) et les soles (220) sont placés en position active lorsque la porte du four (2) est fermée et sont placés en position passive lorsque la porte du four (2) est ouverte.

6. Dispositif de cuisson selon l'une quelconque des revendications précédentes, **caractérisé en ce que** ledit chariot (3) comprend un châssis muni de paires de glissières (32) et **en ce que** l'armature (41) de chaque filet (4) est dimensionnée et agencée pour pouvoir coulisser le long desdits glissières (32) et y être supportée.

7. Dispositif de cuisson selon l'une des revendications précédentes, **caractérisé en ce que** le matériau souple (42) constituant lesdits filets (4) est un matériau perméable à l'eau et/ou à la vapeur d'eau, tel une toile ou un treillis.

8. Dispositif de cuisson selon l'une des revendications précédentes, **caractérisé par le fait que** lesdits filets (4) sont réalisés en fibres de verre tissées.

9. Dispositif de cuisson selon l'une des revendications précédentes, **caractérisé en ce que** lesdits filets (4) sont revêtus d'un matériau anti-adhérent.

10. Procédé de cuisson de pâtons alimentaires, **caractérisé en ce qu'**il comprend les étapes consistant à :
- disposer lesdits pâtons à l'intérieur des alvéoles d'un filet (4) constitué d'un matériau souple (42), tel qu'une toile ou un treillis, fixé sur une armature (41), ce matériau souple (42) étant résistant à la chaleur,
- introduire ce filet (4) à l'intérieur d'un four (2) équipé d'au moins une sole de cuisson (220), de moyens de chauffage (23) desdites soles (220), et de moyens de déplacement vertical (5,5',7) des soles (220) et/ou des filets (4),
- déplacer verticalement ladite sole (220) et/ou ledit filet (4) l'un par rapport à l'autre, de façon à amener ladite sole (220) et ledit filet (4) dans une position dite "active", dans laquelle le fond (421) des alvéoles (420) du filet (4) vient au contact de la sole de cuisson (220) située en regard et se déforme au contact de cette sole de cuisson (220), de façon à réaliser une cuisson par conduction desdits pâtons,
- déplacer verticalement ladite sole (220) et/ou ledit filet (4) l'un par rapport à l'autre, de façon à les amener dans une position dite "passive", dans laquelle le fond (421) des alvéoles (420) est écarté de la sole (220) située en regard, de façon à pouvoir sortir ledit filet (4) du four (2).

## Patentansprüche

1. Vorrichtung (1) zum Backen teigbasierter Lebensmittelprodukte, insbesondere Vorprodukten, umfassend:
- einen Ofen (2) und einen Laufwagen (3)
- wobei der Ofen (2) Folgendes umfasst: eine Backkammer (21), ein Backmodul (22), das eine Reihe von voneinander beabstandeten, übereinanderliegenden Backofensohlen (220) aus gut wärmeleitendem Material umfasst, und Heizmittel (23) der Sohlen, wobei das Backmodul (22) im Innern der Backkammer (21) angeordnet ist, **dadurch gekennzeichnet, dass** die Vorrichtung Folgendes umfasst:
- eine Reihe von Ablagen (4), von denen jede einen flexiblen Materialstreifen (42) umfasst, der an einem Gestell (41) befestigt ist, wobei das flexible Material (42), das verformbar ist, wärmebeständig ist und mindestens eine Vertiefung (420) zur Aufnahme der zu backenden Lebensmittelprodukte umfasst,
- den Laufwagen (3), der die Ablagen stützt, die so angeordnet sind, dass sie alle übereinanderliegen, wobei sie voneinander beabstandet sind, dazu ausgebildet, um das Einführen der Ablagen (4) in den Ofen (2) und deren Herausziehen daraus zu ermöglichen, und der Positioniermittel für jede Ablage (4) über und gegenüber einer Backofensohle (220) umfasst,
- Mittel (5, 5', 7) zur vertikalen Bewegung der Sohlen (220) des Backmoduls (22) und/oder der Ablagen (4) relativ zueinander, wobei die Mittel zur vertikalen Bewegung es ermöglichen, die Sohlen (220) und die Ablagen (4) in eine sogenannte "aktive" Position zu bewegen, in der der Boden (421) der Vertiefungen (420) einer Ablage (4) in Kontakt mit der gegenüberliegenden Backofensohle (220) kommt und sich in Kontakt mit der Backofensohle (220) verformt, damit ein Backen der Lebensmittelprodukte durch Wärmeleitung realisiert wird, und in eine sogenannte "passive" Position, in der der Boden (421) der Vertiefungen (420) von der gegenüberliegenden Sohle (220) beabstandet ist, damit die Ablagen (4) in den Ofen (2) eingeführt und daraus herausgezogen werden können,
wobei die Mittel (5, 5', 7) zur vertikalen Bewegung der Sohlen (220) und/oder der Ablagen (4) in dem Ofen (2) aufgenommen sind, **dadurch gekennzeichnet, dass** der Ofen Mittel (5', 7, 70) umfasst, mit denen die Ablagen (4) und das Backmodul (22) gleichzeitig in Drehung gebracht werden, und dadurch, dass die Mittel, mit denen die Ablagen (4) und das Backmodul (22) gleichzeitig in Drehung gebracht werden, außerdem Mittel zur vertikalen Bewegung der Sohlen (220) des Backmoduls (22) und/oder der Ablagen (4) relativ zueinander darstellen.

2. Vorrichtung nach Anspruch 1, **dadurch gekennzeichnet, dass** die Mittel zur vertikalen Bewegung (5) Mittel zur Bewegung des Backmoduls (22) sind, die es ermöglichen, das Backmodul anzuheben, um es in die aktive Position zu versetzen und es abzusenken, um es in die passive Position zu versetzen.

3. Vorrichtung nach Anspruch 1, **dadurch gekennzeichnet, dass** sich die Mittel zur vertikalen Bewegung der Ablagen (4) auf dem Laufwagen (3) befinden und aus einem Tragrahmen der Ablagen (4) ausgebildet sind, der relativ zu der Struktur des Laufwagens (3) verschiebbar ist.

4. Vorrichtung zum Backen nach einem der vorhergehenden Ansprüche, **dadurch gekennzeichnet, dass** die Heizmittel (23) der Sohlen eine Luftantriebsturbine und eine Heizquelle umfassen, wie etwa einen Brenner oder einen elektrischen Widerstand.

5. Vorrichtung zum Backen nach einem der vorhergehenden Ansprüche, **dadurch gekennzeichnet, dass** dieselbe eine Vorrichtung zur Regelung (6) des Betriebs der Mittel (5, 7, 70, 5') zur vertikalen Bewegung der Sohlen (220) und/oder der Ablagen (4) relativ zueinander und/oder der Mittel, mit denen die Ablagen (4) und das Backmodul (22) gleichzeitig in Drehung gebracht werden, in Abhängigkeit von der Position der Zugangstür (20) zu dem Ofen (2) umfasst, sodass die Ablagen (4) und die Sohlen (220) sich in der aktiven Position befinden, wenn die Tür des Ofens (2) geschlossen ist, und sich in der passiven Position befinden, wenn die Tür des Ofens (2) offen ist.

6. Vorrichtung zum Backen nach einem der vorhergehenden Ansprüche, **dadurch gekennzeichnet, dass** der Laufwagen (3) einen mit einem Paar Gleitschienen (32) ausgestatteten Rahmen umfasst, und dadurch, dass das Gestell (41) jeder Ablage (4) dimensioniert und ausgebildet ist, um entlang der Gleitschienen (32) gleiten zu können und von ihnen gestützt zu werden.

7. Vorrichtung zum Backen nach einem der vorhergehenden Ansprüche, **dadurch gekennzeichnet, dass** das flexible Material (42), das die Ablagen (4) darstellt, ein wasserdurchlässiges und/oder wasserdampfdurchlässiges Material ist, wie etwa ein Gewebe oder ein Geflecht.

8. Vorrichtung zum Backen nach einem der vorhergehenden Ansprüche, **gekennzeichnet durch** die Tatsache, dass die Ablagen (4) in gewebten Glasfasern realisiert sind.

9. Vorrichtung zum Backen nach einem der vorhergehenden Ansprüche, **dadurch gekennzeichnet, dass** die Ablagen (4) antihaftbeschichtet sind.

10. Verfahren zum Backen von Lebensmittelvorprodukten, **dadurch gekennzeichnet, dass** es die folgenden Schritte umfasst:
- Bereitstellen der Vorprodukte im Innern von Vertiefungen einer Ablage (4), die aus einem flexiblen Material (42) besteht, wie etwa einem Gewebe oder einem Geflecht, das auf einem Gestell (41) befestigt ist, wobei das flexible Material (42) hitzebeständig ist,
- Einführen der Ablage (4) in das Innere eines Ofens (2), der zumindest mit einer Backofensohle (220), Heizmitteln (23) der Sohlen (220) und Mitteln (5, 5', 7) zur vertikalen Bewegung der Sohlen (220) und/oder der Ablagen (4) ausgestattet ist,
- vertikales Bewegen der Sohle (220) und/oder der Ablage (4) relativ zueinander, damit die Sohle (220) und die Ablage (4) in eine sogenannte "aktive" Position versetzt werden, in der der Boden (421) der Vertiefungen (420) der Ablage (4) in Kontakt mit der gegenüberliegenden Backofensohle (220) kommt und sich in Kontakt mit der Backofensohle (22) verformt, damit ein Backen der Vorprodukte durch Wärmeleitung realisiert wird,
- vertikales Bewegen der Sohle (220) und/oder der Ablage (4) relativ zueinander, damit diese in eine sogenannte "passive" Position versetzt werden/wird, in der der Boden (421) der Vertiefungen (420) von der gegenüberliegenden Sohle (220) beabstandet ist, um die Ablage (4) aus dem Ofen (2) herausnehmen zu können.

## Claims

1. A cooking device (1) of food products made from dough, including dough pieces, comprising:
- an oven (2) and a carriage (3),
- the oven (2) comprising a cooking chamber (21), a cooking module (22) which itself comprises several soleplates (220) in good thermal conductive material, stacked, spaced apart from each other, and heating means (23) of said soleplates, this cooking module (22) being disposed within said cooking chamber (21), **characterized in that** said device comprises:
- several grooves (4), each comprising a flexible material strip (42) attached to an armature (41), said flexible material (42), deformable, being heat resistant and comprising at least one compartment (420) for receiving said food products to be cooked,
- said carriage (3) supporting said grooves arranged so as to be layered while being spaced apart from each other, is arranged to allow introducing said grooves (4) in the oven (2) and their extraction from it and comprises positioning means of each groove (4) above and opposite a cooking element (220),
- means for vertical moving (5, 5', 7) of the soleplates (220) of said cooking module (22) and/or grooves (4) relative to each other, these vertical moving means bringing said soleplates (220) and said grooves (4) in a position known as "active", wherein the bottom (421) of the compartments (420) of a groove (4) comes into contact with the cooking element (220) located next to it and is deformed in contact with said cooking element (220), so as to cook said food products by conduction, and in a position known as "passive", in which the bottom (421) of said compartments is separated from the element (220) located next to it so that said grooves (4) can be introduced into or extracted from said oven (2),
said vertical moving means (5, 5', 7) of the soleplates (220) and/or grooves (4) being housed in the oven (2), **characterized in that** it comprises means (5', 7, 70) for simultaneously rotating the grooves (4) and the cooking module (22), and **in that** these means for simultaneously rotating the grooves (4) and the cooking module (22) also constitute the means for vertically moving the soleplates (220) of said cooking module (22) and/or grooves (4) relative to the other.

2. Device according to Claim 1, **characterized in that** said vertical moving means (5) are means for moving the cooking module (22) which allow lifting it to bring it into the active position and to lower it to bring it into the passive position.

3. Device according to Claim 1, **characterized in that** said vertical moving means of the grooves (4) are located on the carriage (3) and are constituted by a supporting frame of said grooves (4), mobile in translation with respect to the structure of the carriage (3).

4. A cooking device according to any one of the preceding claims, **characterized in that** said heating means (23) of the soleplates comprises an air propulsion turbine and a heating source, such as a burner or an electrical resistance.

5. A cooking device according to any one of the preceding claims, **characterized in that** it comprises a servocontrol device (6) of the operating means (5, 7, 70, 5') of vertical moving of said soleplates (220) and/or said grooves (4) relative to each other and/or means for simultaneously rotating the grooves (4) and the cooking module (22), depending on the position of the access door (20) to the oven (2), so that the grooves (4) and the soleplates (220) are placed in the active position when the oven door (2) is closed and placed in the passive position when the oven door (2) is open.

6. A cooking device according to any one of the preceding claims, **characterized in that** said carriage (3) comprises a frame provided with pairs of rails (32) and **in that** the armature (41) of each groove (4) is sized and arranged so as to be slidable along said rails (32) and be supported by them.

7. A cooking device according to one of the preceding claims, **characterized in that** the flexible material (42) constituting said grooves (4) is a material permeable to water and/or steam, such as a canvas or a mesh.

8. A cooking device according to one of the preceding claims, **characterized in that** said grooves (4) are made of woven glass fibers.

9. A cooking device according to one of the preceding claims, **characterized in that** said grooves (4) are coated with a non-stick material.

10. A method of cooking food dough pieces, **characterized in that** it comprises the steps of:
- arranging said dough pieces inside the compartments of a groove (4) consisting of a flexible material (42) such as a cloth or mesh, mounted on an armature (41), said flexible material (42) being heat resistant,
- introducing this groove (4) inside an oven (2) equipped with at least one cooking element (220), heating means (23) of said soleplates (220), and means for vertical moving (5, 5', 7) of the soleplates (220) and/or grooves,
- vertically moving said soleplate (220) and/or said groove (4) relative to each other, so as to bring said soleplate (220) and said groove (4) in a position known as "active" in which the bottom (421) of the compartments (420) of the groove (4) comes into contact with the soleplate (220) located next to it and deforms in contact with said soleplate (220), so as to cook said dough pieces by conduction,
- vertically moving said soleplate (220) and/or said groove (4) relative to each other, so as to bring them into a position known as "passive", in which the bottom (421) of the compartments (420) is spaced from the element (220) located opposite, so as to pull said groove (4) out of the oven (2).
